# DEMANDE DE BREVET EUROPEEN

(11) **EP 2 586 842 A2**
(43) Date de publication de la demande: **01.05.2013**
(21) Numéro de dépôt: 13152355.7
(22) Date de dépôt: 24.09.2009
(51) Int. Cl.: C09K 5/04

(54) **Fluide de transfert de chaleur**

(30) Priorité: 08.10.2008 FR 0856817; 09.10.2008 FR 0856836
(62) Demande divisionnaire de: 09759757.9
(71) Demandeur: ARKEMA FRANCE, 92705 Colombes Cedex (FR)
(72) Inventeur: Rached, Wissam, 69630 CHAPONOST (FR)

(57) **Abrégé**

La présente invention a pour objet des compositions à base de tetrafluoropropène et a plus particulièrement pour objet des compositions comprenant de 60 à 90 % en poids du 2,3,3,3 tetrafluoropropène et de 10 à 40 % en poids d'au moins un composé choisi parmi le difluoroéthane et le difluorométhane uitlisable comme fluide de transfert de chaleur.

## Description

La présente invention concerne des compositions renfermant des hydrofluorooléfines et leurs utilisations comme fluides de transfert de chaleur, agents d'expansion, solvants et aérosols.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la production d'air conditionné a beaucoup investi dans la substitution de ces fluides frigorigènes et c'est ainsi que les hydrofluorocarbures (HFC) ont été commercialisés.

Les (hydro)chlorofluorocarbures utilisés comme agents d'expansion ou solvants ont également été substitués par des HFC.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane: HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentials) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène des systèmes de climatisation en remplacement du HFC-134a. Toutefois, l'emploi du dioxyde de carbone présente plusieurs inconvénients, notamment liés à la pression très élevée de sa mise en oeuvre en tant que fluide frigorigène dans les appareils et technologies existants.

Par ailleurs, le mélange R-404A constitué de 44 % en poids de pentafluoroéthane, 52 % en poids de trifluoroéthane et 4 % en poids de HFC-134a est largement utilisé comme fluide de réfrigération de grandes surfaces (supermarché) et dans les transports frigorifiques. Ce mélange a toutefois un GWP de 3900. Le mélange R-407C, constitué de 52 % en poids du HFC-134a, 25 % en poids du pentafluoroethane et 23 % en poids de difluoromethane, est utilisé comme fluide de transfert de chaleur dans l'air conditionné et les pompes à chaleur. Ce mélange a toutefois un GWP de 1800.

Le document JP 4110388 décrit l'utilisation des hydrofluoropropènes de formule C₃HₘFₙ, avec m, n représentant un nombre entier compris entre 1 et 5 inclus et m + n = 6, comme fluides de transfert de chaleur, en particulier le tetrafluoropropène et le trifluoropropène.

Le document WO2004/037913 divulgue l'utilisation des compositions comprenant au moins un fluoroalcène ayant trois ou quatre atomes de carbone, notamment le pentafluoropropène et le tetrafluoropropène, de préférence ayant un GWP au plus de 150, comme fluides de transfert de chaleur.

Le document WO 2005/105947 enseigne l'ajout au tetrafluoropropène, de préférence le 1,3,3,3 tetrafluoropropène, d'un co-agent d'expansion tels que le difluoromethane, le pentafluoroéthane, le tetrafluoroéthane, le difluoroéthane, l'heptafluoropropane, l'hexafluoropropane, le pentafluoropropane, le pentafluorobutane, l'eau et le dioxyde de carbone.

Le document WO 2006/094303 divulgue une composition azéotropique contenant 7,4 % en poids du 2,3,3,3 tetrafluoropropène (1234yf) et 92,6 % en poids du difluorométhane (HFC-32). Ce document divulgue également une composition azéotropique contenant 91 % en poids du 2,3,3,3 tetrafluoropropène et 9 % en poids du difluoroéthane (HFC-152a).

La demanderesse a maintenant mis au point des compositions renfermant des hydrofluoropropènes, utilisables comme fluide de transfert de chaleur, ne présentant pas les inconvénients précités et ayant à la fois un ODP nul et un GWP inférieur à celui des fluides de transfert de chaleur existants comme le R-404A ou le R-407C ou R22 (le chlorodifluorométhane).

Les compositions selon la présente invention sont caractérisées en ce qu'elles comprennent de 60 à 90 % en poids du 2,3,3,3 tetrafluoropropène et de 10 à 40 % en poids d'au moins un composé choisi parmi le difluoroéthane et le difluorométhane.

Selon un premier mode de réalisation de l'invention les compositions comprennent de 60 à 79 % en poids du 2,3,3,3 tetrafluoropropène et de 21 à 40 % en poids d'un composé choisi parmi le difluoroéthane et difluorométhane.

Les compositions selon ce premier mode de réalisation comprennent de préférence de 60 à 70 % en poids du 2,3,3,3 tetrafluoropropène et de 30 à 40 % en poids d'un composé choisi parmi le difluoroéthane et difluorométhane.

Avantageusement, les compositions selon ce premier mode comprennent de 60 à 65 % en poids du 2,3,3,3 tetrafluoropropène et de 35 à 40 % en poids d'un composé choisi parmi le difluoroéthane et le difluorométhane.

Les compositions particulièrement préférées selon ce premier mode de réalisation comprennent du 2,3,3,3 tetrafluoropropène et du difluorométhane.

Avantageusement ces compositions contiennent essentiellement du 2,3,3,3 tetrafluoropropène et du difluorométhane.

Selon un deuxième mode de réalisation de l'invention, les compositions comprennent de 60 à 90 % en poids du 2,3,3,3 tetrafluoropropène et de 10 à 40 % en poids d'un mélange constitué de difluorométhane et de difluoroéthane.

Les compositions préférées selon ce deuxième mode de réalisation comprennent de 60 à 80 % en poids de 2,3,3,3 tetrafluoropropène et de 20 à 40 % en poids d'un mélange constitué de difluorométhane et de difluoroéthane.

Les compositions avantageusement préférées selon ce deuxième mode comprennent de 60 à 75 % en poids de 2,3,3,3 tetrafluoropropène et de 25 à 40 % en poids d'un mélange constitué de difluorométhane et de difluoroéthane.

Des compositions particulièrement préférées comprennent de 60 à 80 % en poids de 2,3,3,3 tetrafluoropropène et de 5 à 35 % en poids de difluorométhane et de 5 à 35 % en poids de difluoroéthane.

Les compositions intéressantes sont celles comprenant ou contenant essentiellement de 60 à 80 % en poids de 2,3,3,3 tetrafluoropropène et de 10 à 30 % en poids de difluorométhane et de 10 à 30 % en poids de difluoroéthane.

Les compositions selon la présente invention peuvent comprendre un stabilisant du 2,3,3,3 tetrafluoropropène. Le stabilisant représente au plus 5 % en poids par rapport à la composition totale.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Les compositions selon la présente invention peuvent comprendre des lubrifiants tels que l'huile minérale, alkylbenzène, le polyalkylène glycol et le polyvinyl éther.

Les compositions selon la présente invention conviennent pour le remplacement du R-404A en réfrigération et/ou du R-407C dans l'air conditionné et pompes à chaleur dans les installations actuelles. Elles peuvent également convenir en remplacement du R-404A dans des systèmes de réfrigération avec une compression en cascade dans laquelle on opère dans au moins un étage avec les compositions selon la présente invention. A titre d'exemple de compositions particulièrement intéressantes pour le remplacement du R-404A dans les installations existantes, on peut citer celles comprenant ou contenant essentiellement 60 % en poids du 2,3,3,3 tetrafluoropropène et 40 % en poids du difluoromethane ; 70 % en poids du 2,3,3,3 tetrafluoropropène et 30 % en poids du difluorométhane ; 60 % en poids du 2,3,3,3 tetrafluoropropène, 30 % en poids du difluorométhane et 10 % en poids du difluoroéthane.

A titre d'exemple de compositions particulièrement intéressantes pour le remplacement du R-404A dans des systèmes à compression en cascade, on peut citer celles comprenant ou contenant essentiellement 60 % en poids du 2,3,3,3 tetrafluoropropène et 40 % en poids du difluoroéthane ; 70 % en poids du 2,3,3,3 tetrafluoropropène et 30 % en poids du difluoroéthane ; 75 % en poids du 2,3,3,3 tetrafluoropropène, 20 % en poids du difluorométhane et 5 % en poids du difluoroéthane.

Les compositions selon la présente invention peuvent également être utilisés en remplacement du R-407C, par exemple dans les pompes à chaleurs.

A titre d'exemple de compositions particulièrement intéressantes pour le remplacement du R-407C dans les installations existantes, on peut citer celles comprenant ou contenant essentiellement 60 % en poids du 2,3,3,3 tetrafluoropropène et 40 % en poids du difluoromethane ; 70 % en poids du 2,3,3,3 tetrafluoropropène et 30 % en poids du difluorométhane ; 60 % en poids du 2,3,3,3 tetrafluoropropène, 30 % en poids du difluorométhane et 10 % en poids du difluoroéthane ; 70 % en poids du 2,3,3,3 tetrafluoropropène, 25 % en poids du difluorométhane et 5 % en poids de difluoroéthane.

Les compositions selon la présente invention sont en outre utilisables comme agents d'expansion, aérosols et solvants.

### PARTIE EXPERIMENTALE

Les performances des compositions selon l'invention dans les conditions de fonctionnement de réfrigération sont données dans le Tableau 1. Les valeurs des constituants (1234yf, 32 et 152a ) pour chaque composition sont données en pourcentage en poids.

Pour le R404A la pression nominale de fonctionnement est de 18 bar, la capacité volumétrique est de 1500 kJ/m³ et le COP est de 1,8 dans les conditions de fonctionnement suivantes :

| | |
|---|---|
| Température d'évaporation | : -20°C |
| Température de condensation | : 40°C |
| Température entrée compresseur | : -5°C |
| Température du liquide sous refroidi | : 33°C |
| Rendement isentropique du compresseur | : 70 % |

| | |
|---|---|
| BP : pression à l'évaporateur HP : pression au condenseur Taux : le taux de compression T sortie comp : température à la sortie compresseur COP : coefficient de performance et est défini, lorsqu'il s'agit de la réfrigération comme étant la puissance froide utile fournie par le système sur la puissance apportée ou consommée par le système. CAP : capacité volumétrique (kJ/m³) % CAP ou COP c'est le rapport de la valeur du CAP ou COP du mélange par rapport à la meme valeur pour le R404A. | |

**Tableau 1**

| **Compositions** | | | **BP (bar)** | **HP (bar)** | **Taux (p/p)** | **T sortie comp** | **% COP** | **%CAP** |
|---|---|---|---|---|---|---|---|---|
| **R404A** | | | 3 | 18 | 6,10 | 77 | 100 | 100 |
| **1234yf** | **32** | **152a** | | | | | | |
| **60** | **40** | **0** | 2,7 | 21 | 7,57 | 111 | 96 | 102 |
| **70** | **30** | **0** | 2,4 | 19 | 8,02 | 104 | 94 | 89 |
| 75 | 25 | 0 | 2,2 | 18 | 8,19 | 101 | 94 | 83 |
| | | | | | | | | |

| **1234yf** | **32** | **152a** | | | | | | |
|---|---|---|---|---|---|---|---|---|
| 60 | 20 | 20 | **2,0** | **16** | 8,01 | 100 | **98** | **76** |
| 60 | 30 | 10 | **2,3** | **18** | 7,94 | 106 | **96** | **88** |
| 70 | 25 | 5 | 2,2 | 18 | 8,10 | 101 | 95 | 83 |
| 70 | 20 | 10 | 2,0 | 16 | 8,07 | 98 | 96 | 77 |
| 75 | 20 | 5 | **2,0** | **16** | 8,16 | 97 | **95** | **77** |
| 75 | 15 | 10 | **1,9** | **15** | 8,01 | 93 | **97** | **72** |
| 85 | 10 | 5 | **1,8** | **14** | 7,92 | 86 | **99** | **67** |
| | | | | | | | | |

| **1234yf** | **32** | **152a** | | | | | | |
|---|---|---|---|---|---|---|---|---|
| **60** | **0** | **40** | 1,5 | 10 | 6,60 | 79 | 114 | 59 |
| 70 | 0 | 30 | 1,5 | 10 | 6,53 | 76 | 113 | 59 |

Les performances des compositions selon la présente invention dans les conditions de fonctionnement de pompe à chaleur et climatisation sont données dans le Tableau 2. Les valeurs des constituants (1234yf, 32 et 152a) pour chaque composition sont données en pourcentage en poids.

Pour le R407C, la pression nominale de fonctionnement est de 34 bar, la capacité volumétrique est de 1461 kJ/m³ et le COP est de 2,1 dans les conditions de fonctionnement suivantes :

| | |
|---|---|
| Température d'évaporation | : -5°C |
| Température de condensation | : 70°C |
| Température entrée compresseur | : 5°C |
| Température du liquide sous refroidi | : 65°C |
| Rendement isentropique du compresseur | : 70 % |

| | |
|---|---|
| BP : pression à l'évaporateur HP : pression au condenseur Taux : le taux de compression T sortie comp : température à la sortie compresseur COP : coefficient de performance et est défini, lorsqu'il s'agit d'une pompe à chaleur, comme étant la puissance chaude utile fournie par le système sur la puissance apportée ou consommée par le système. CAP : capacité volumétrique (kJ/m³) % CAP ou COP c'est le rapport de la valeur du CAP ou COP du mélange par rapport à la meme valeur pour le R-407C. | |

**Tableau 2**

| **Compositions** | | | **BP (bar)** | **HP (bar)** | **Taux (p/p)** | **T sortie comp** | **% COP** | **%CAP** |
|---|---|---|---|---|---|---|---|---|
| **R407C** | | | 3,9 | 34,4 | | 127 | 100 | 100 |
| **1234yf** | **32** | **152a** | | | | | | |
| 60 | 40 | 0 | 4,8 | 39,7 | 8,30 | 133 | 91,9 | 112 |
| 70 | 30 | 0 | 4,2 | 36,5 | 8,69 | 126 | 92,4 | 99 |
| 75 | 25 | 0 | 3,9 | 34,6 | 8,85 | 122 | 93,2 | 93 |

| **1234yf** | **32** | **152a** | | | | | | |
|---|---|---|---|---|---|---|---|---|
| 60 | 20 | 20 | 3,5 | 30,1 | 8,64 | 121 | 101,5 | 89 |
| 60 | 30 | 10 | 4,1 | 35,0 | 8,60 | 128 | 97,1 | 101 |
| | | | | | | | | |
| 70 | 25 | 5 | 3,9 | 33,9 | 8,74 | 123 | 95,5 | 94 |
| 70 | 20 | 10 | 3,6 | 31,2 | 8,70 | 119 | 98,3 | 88 |
| | | | | | | | | |
| 75 | 20 | 5 | 3,6 | 31,8 | 8,79 | 118 | 96,4 | 88 |
| 75 | 15 | 10 | 3,3 | 28,9 | 8,64 | 113 | 99,3 | 82 |
| | | | | | | | | |
| 85 | 10 | 5 | 3,1 | 26,7 | 8,58 | 107 | 99,3 | 75 |

| **1234yf** | **32** | **152a** | | | | | | |
|---|---|---|---|---|---|---|---|---|
| 60 | 0 | 40 | 2,6 | 18,9 | 7,27 | 98 | 113,7 | 67 |
| 70 | 0 | 30 | 2,7 | 19,1 | 7,19 | 95 | 111,3 | 66 |

## Revendications

1. Composition comprenant de 60 à 90 % en poids du 2,3,3,3 tetrafluoropropène et de 10 à 40 % en poids d'au moins un composé choisi parmi le difluoroéthane et le difluorométhane.

2. Composition selon la revendication 1 **caractérisé en ce qu'**elle comprend de 60 à 79 % en poids du 2,3,3,3 tetrafluoropropène et de 21 à 40 % en poids d'un composé choisi parmi le difluoroéthane et difluorométhane.

3. Composition selon l'une quelconque des revendications 1 à 2 **caractérisé en ce qu'**elle comprend de 60 à 70 % en poids du 2,3,3,3 tetrafluoropropène et de 30 à 40 % en poids d'un composé choisi parmi le difluoroéthane et difluorométhane.

4. Composition selon la revendication 1 **caractérisé en ce qu'**elle comprend de 60 à 80 % en poids de 2,3,3,3 tetrafluoropropène et de 20 à 40 % en poids d'un mélange constitué de difluorométhane et de difluoroéthane.

5. Composition selon la revendication 1 **caractérisé en ce qu'**elle comprend de 60 à 80 % en poids de 2,3,3,3 tetrafluoropropène et de 5 à 35 % en poids de difluorométhane et de 5 à 35 % en poids de difluoroéthane.

6. Composition selon la revendication 1ou 5 **caractérisé en ce qu'**elle comprend de 60 à 80 % en poids de 2,3,3,3 tetrafluoropropène et de 10 à 30 % en poids de difluorométhane et de 10 à 30 % en poids de difluoroéthane.

7. Fluide de transfert de chaleur comprenant une composition selon l'une quelconque des revendications précédentes.

8. Utilisation d'une composition selon l'une quelconque des revendications 1 à 6 en remplacement du R-404A dans la réfrigération et/ou en remplacement du R-407C dans les pompes à chaleur, ou air conditionné.
